(19) Europäisches Patentamt
European Patent Office
Office européen des brevets

(11) **EP 2 599 256 B1**

(12) **FASCICULE DE BREVET EUROPEEN**

(45) Date de publication et mention
de la délivrance du brevet:
**19.03.2014   Bulletin 2014/12**

(21) Numéro de dépôt: **11743993.5**

(22) Date de dépôt: **29.07.2011**

(51) Int Cl.:
***H04L 9/00*** *(2006.01)*

(86) Numéro de dépôt international:
**PCT/EP2011/063073**

(87) Numéro de publication internationale:
**WO 2012/013768 (02.02.2012 Gazette 2012/05)**

(54) **PROCEDE ET DISPOSITIF DE RANDOMISATION D'UNE CLE SECRETE CONTRE LES ATTAQUES PAR CANAUX AUXILIAIRES**

VERFAHREN UND VORRICHTUNG ZUR RANDOMISIERUNG EINES GEHEIMSCHLÜSSELS FÜR DEN SCHUTZ VOR ANGRIFFEN DURCH ZUSATZKANÄLE

METHOD AND DEVICE FOR RANDOMIZING A SECRET KEY FOR PROTECTING AGAINST ATTACKS BY AUXILIARY CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2010   FR 1003217**

(43) Date de publication de la demande:
**05.06.2013   Bulletin 2013/23**

(73) Titulaire: **Thales**
**92200 Neuilly-sur-Seine (FR)**

(72) Inventeurs:
• **FUMAROLI, Guillaume**
  **F-92700 Colombes (FR)**
• **PAINCHAULT, Philippe**
  **F-92700 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A2-03/017067**

• **KAI SCHRAMM ET AL: "Higher Order Masking of the AES", 1 janvier 2005 (2005-01-01), TOPICS IN CRYPTOLOGY - CT-RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER, BERLIN, DE, PAGE(S) 208 - 225, XP019026783, ISBN: 978-3-540-31033-4 abrégé chapitre 1, "Introduction"; pages 208-209 chapitre 3, "Secure HODPA AES Masking Scheme"; pages 214-219 figure 8**
• **Clapp C S K: Fast Software Encryption 5th International Workshop, FSE '98 Proceedings, 23 mars 1998 (1998-03-23), 25 mars 1998 (1998-03-25), pages 75-92, XP002624191, ISBN: 3-540-64265-X Extrait de l'Internet: URL:http://www.springerlink.com/content/h16x8gca1enrcehy/ [extrait le 2011-02-22]**
• **CHARI S ET AL: "TOWARDS SOUND APPROACHES TO COUNTERACT POWER-ANALYSIS ATTACKS", 19990101, vol. 1666, 1 janvier 1999 (1999-01-01), pages 398-412, XP001179143, DOI: DOI: 10.1007/3-540-48405-1_26 ISBN: 978-3-540-24128-7**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé et un dispositif permettant de sécuriser la manipulation des clés secrètes utilisées notamment dans les équipements de cryptographie.

Par cryptographie on entend l'ensemble des procédés qui visent à assurer la confidentialité, l'authentification, l'intégrité et de façon plus générale l'ensemble des procédés relatifs à la sécurité de l'information.

Le terme « masque d'une donnée x » sera utilisé par la suite pour désigner une séquence $(x_1, x_2, ..., x_n)$ de composantes aléatoires sauf une, vérifiant $x = x_1 \, O \, x_2 \, O \, \cdots$ pour une certaine opération de groupe O. Le terme « randomisation d'un masque » sera utilisé par la suite pour désigner la production étant donné un masque M d'une donnée x, d'un nouveau masque M' de la même donnée x avec de nouvelles composantes aléatoires.

Elle s'applique, par exemple, dans les circuits électroniques et plus particulièrement pour le masquage de données utilisées dans le domaine des traitements cryptographiques, notamment le traitement d'une clé secrète intervenant dans un dispositif de cryptographie.

Dans la suite de la description le mot groupe désigne selon la notation mathématique habituelle un ensemble non vide muni d'une loi de composition interne. Le procédé et le dispositif selon l'invention peuvent s'appliquer pour toute donnée pouvant se présenter sous la forme d'une suite d'éléments appartenant à un groupe G.

L'implémentation matérielle d'un algorithme au sein d'un dispositif de cryptographie manipulant des éléments secrets est a priori vulnérable aux attaques physiques également appelées attaques par canaux auxiliaires. Ces attaques reposent sur la capacité d'un adversaire à interagir physiquement avec le dispositif attaqué. Cette interaction peut être aussi bien active que passive. Les attaques actives visent à perturber le bon fonctionnement du dispositif pour obtenir de l'information en analysant le comportement erratique induit. Les attaques passives également appelées attaques par observation consistent quant à elles à observer les effets induits par le dispositif sur son environnement qui sont inhérents à son fonctionnement. On peut citer les variations de consommation de courant, d'émissions électromagnétiques, les attaques par sondes, etc.

L'objet de l'invention vise plus particulièrement les attaques par observation. Dans ce contexte, l'art antérieur définit la notion d'ordre. Ainsi, une attaque par observation est dite d'ordre *d* si l'adversaire doit exploiter d mesures obtenues à d instants distincts de l'exécution de l'algorithme de cryptographie sur le dispositif attaqué pour obtenir de l'information sur les éléments secrets qu'il contient. On dira également qu'une attaque par observation est d'ordre d dans le cas d'une attaque par sonde si pour obtenir de l'information sur les éléments secrets, l'adversaire doit exploiter simultanément d sondes placées sur les câbles du dispositif attaqué pour lire les valeurs qui y transitent. Réciproquement, une implémentation est dite résistante à l'ordre d si et seulement si aucune attaque d'ordre au plus égal à *d* ne permet de retrouver d'informations sur le secret qu'il contient. Pour ce faire, l'implantation est construite de sorte que tout *d*-uplet de ses variables intermédiaires générées lors de la mise en oeuvre du module de cryptographie est indépendant du secret.

Il est usuel d'utiliser une quantité aléatoire pour masquer une opération manipulant une clé. Par exemple, un texte à chiffrer est combiné avec une quantité aléatoire avant d'être manipulé par le dispositif pour fournir le texte chiffré. Ceci permet de masquer la corrélation entre les données manipulées par le dispositif de cryptographie et la clé secrète.

La demande de brevet EP 2 020 773 décrit une méthode qui permet de masquer une donnée manipulée par un circuit électronique dans un calcul. Cette méthode s'applique toutefois sur la donnée à chiffrer et ne concerne pas la clé secrète elle-même.

La présente invention concerne notamment la génération d'un masque de la clé secrète de façon sûr vis-à-vis des attaques par canaux auxiliaires d'ordre supérieur.

**Définitions utilisées dans l'exemple de la présente invention**

On désignera par la suite p une entrée d'une fonction cryptographique, $p_i$ les composantes du masque de p, et $F_k(p)$ la sortie de la fonction cryptographique qui dépend notamment de l'entrée p et de la clé secrète k.

Mr= masque de référence initial stocké en mémoire non-volatile réinscriptible de longueur D+1 composantes

Mr' = nouveau masque de longueur D+1 composantes qui viendra écraser le masque Mr en mémoire non-volatile réinscriptible

Mr" = nouveau masque de longueur D+1 composantes dont sera dérivé un masque de travail de longueur réduite à d+1 composantes

Mt = masque de travail de d+1 composantes qui sera utilisé dans un processus cryptographique D = valeur du nombre de composantes du masque de référence vérifiant D>=d.

λ = valeur du nombre d'itérations exécutées par le procédé selon l'invention qui est fonction de la résistance aux attaques souhaitées par l'application.

La notion de groupe G est celle qui est associée à la notion mathématique précédemment introduite.

L'invention concerne un procédé de randomisation des composantes $s_1^{(0)}, ..., s_{D+1}^{(0)}$ appartenant à un groupe G d'un masque de référence d'une clé k destinée à des algorithmes cryptographiques au sein d'un module de cryptographie, où D et λ sont des paramètres de sécurité, lesdites valeurs des paramètres de sécurité étant choisies en fonction croissante du degré de sécurité demandé par l'utilisateur, avec D le nombre de composantes du masque de référence et λ un nombre d'itérations, caractérisé en ce qu'il comporte au moins l'utilisation d'un générateur d'aléa pour générer à chaque nouvelle mise en oeuvre dudit procédé, les composantes du masque de référence de ladite clé appartenant à $G^{D+1}$, et les composantes d'un masque dit de travail de ladite clé appartenant à $G^{D+1}$, ledit masque étant mis à jour à chaque nouvelle exécution de l'algorithme de cryptographie, ledit procédé comprenant au moins les étapes suivantes:

1 - à partir des composantes d'un masque de référence de la clé k donné, $s_1(0)$, ..., $s_{D+1}(0)$ G un groupe muni d'une opération interne o avec $k= s_1^{(0)} O \cdots O s_{D+1}^{(0)}$ ,
Exécuter une boucle sur i=0 à λ-1 comprenant les étapes 2 et 3 suivantes :
2 - générer un nouveau masque de référence ou de travail de ladite clé k en utilisant ledit générateur d'aléa produisant les D premières composantes du masque de l'itération i+1

$$(s_1^{(i+1)},...,s_D^{(i+1)}) \leftarrow \text{rand}(G^D)$$

3 - puis déterminer la dernière composante $s_{D+1}^{(i+1)}$ du masque de travail ou de référence de l'itération i+1 en alternant une composante $s_1^{(i)},...,s_{D+1}^{(i)}$ du masque de l'itération i avec une composante $s_1^{(i+1)},...,s_D^{(i+1)}$ du masque de l'itération i+1 générés à l'étape 2, en respectant l'ordre des composantes,
4 - effectuer À itérations des étapes 2 et 3 afin d'obtenir un masque de composantes $(s_1^{(\lambda)},...,s_{D+1}^{(\lambda)})$, utiliser ledit masque soit pour mettre à jour le masque de référence, soit pour exécuter un procédé cryptographique.

Le procédé peut comporter une étape de réduction du nombre d'éléments obtenus à l'étape 4 pour réduire le masque $(s_1^{(\lambda)},...,s_{D+1}^{(\lambda)})$ en question de D+1 composantes à d+1 composantes $(k_1, ..., k_{d+1})$ où chacune des composantes $k_i$ est obtenue par combinaison d'une ou plusieurs des composantes $s_i^{(\lambda)}$.
La combinaison d'une ou de plusieurs des composantes $s_i^{(\lambda)}$ est, par exemple, exécutée en mettant en oeuvre l'opération O associée au groupe G.
Selon une variante de mise en oeuvre D est fixé à D=2d, le paramètre λ est fixé λ=d+1 pour obtenir un masque de référence mis à jour, et λ = d-1 pour obtenir un masque de travail avant réduction pour application d'un processus cryptographique.
Selon un mode de réalisation l'étape de réduction des composantes d'un masque est exécutée de la manière suivante : soit un masque $s_1^{(\lambda)},...,s_{D+1}^{(\lambda)}$, de la clé k, le masque de travail devient $k_1, ..., k_d$ avec :

$$k_{\pi(1)} \leftarrow s_{\pi'(1)}^{(\lambda)} \, ,$$

$$k_{\pi(2)} \leftarrow s_{\pi'(2)}^{(\lambda)} \, O \, s_{\pi'(3)}^{(\lambda)} \, ,$$

$$k_{\pi(3)} \leftarrow s_{\pi'(4)}^{(\lambda)} \, O \, s_{\pi'(5)}^{(\lambda)} \, ,$$

$$...$$

$$k_{\pi(d)} \leftarrow s_{\pi'(2d-2)}^{(\lambda)} \, O \, s_{\pi'(2d-1)}^{(\lambda)} \, ,$$

$$k_{\pi(d+1)} \leftarrow s_{\pi'(2d)}^{(\lambda)} \, O \, ... \, O \, s_{\pi'(D+1)}^{(\lambda)}$$

avec :

Π une permutation quelconque de l'ensemble {1, 2, ..., d+1}, par exemple Test l'identité avec Π (1 )=1, Π(2)=2, ..., Π(d+1)=d+1
Π' une permutation quelconque de l'ensemble {1, 2, ..., D+1}, par exemple Π' est l'identité avec Π'(1)=1, Π'(2)=2, ..., Π'(D+1)=D+1.

L'invention concerne aussi un dispositif pour générer un masque de travail d'une clé secrète caractérisé en ce qu'il comporte au moins les éléments suivants : une unité de traitement adaptée à exécuter les étapes du procédé décrit précédemment, une mémoire non volatile et réinscriptible destinée à mémoriser le masque de référence de la clé, des entrées/sorties pour le passage des données d'entrée et de sortie d'un procédé cryptographique, un bus de communication, un générateur d'aléa.

Le dispositif peut comporter une mémoire volatile permettant de stocker les composantes d'un masque lors de la mise en oeuvre du procédé.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un exemple d'implantation du procédé selon l'invention dans un dispositif de cryptographie,
- La figure 2, un schéma bloc des opérations mises en oeuvre par le procédé selon l'invention, et
- La figure 3A un organigramme simplifié des opérations, la figure 3B une variante de la figure 3A.

Avant de décrire les étapes exécutées par le procédé selon l'invention, quelques rappels sur les fonctions cryptographiques utilisées dans les dispositifs de chiffrement sont donnés.

Soit $F_k : p \rightarrow c = F_k(p)$ une fonction cryptographique indexée par un secret $k$ appartenant au groupe $G$. Étant donné la définition mathématique de $F_k$, des procédés existent pour construire de façon systématique un module de cryptographie $A$ résistant à l'ordre $d$, prenant en entrée $p$ et un $(d+1)$-uplet $(k_1, ... kd_{+1})$ pour calculer $C = F_k(p)$, où $k = k_1$ O$\cdots$ O$k_{d+1}$ compatible des opérations effectuées dans $F_k$ par exemple O est l'opération du OU exclusif dans le cas de la plupart des algorithmes de chiffrement par bloc, comme l'algorithme de cryptographie connu DES pour Data Encryption Standard ou l'algorithme de cryptage symétrique AES ou Advanced Encryption Standard, ou encore O est l'opération d'addition modulo phi(n) dans le cas de l'algorithme de chiffrement asymétrique RSA, ou encore O est l'opération d'addition modulo le nombre de points d'une courbe elliptique dans le cas des algorithmes de chiffrement asymétrique sur courbes elliptiques, etc..

On s'intéresse dans le présent exemple à l'algorithme produisant le $(d+1)$-uplet $(k_1, ... k_{d+1})$ appelé masque de travail de k avant chaque nouvelle exécution du procédé de cryptographie $A$ précité. La principale limitation de l'art antérieur est de ne fournir aucune solution pour que l'algorithme global comprenant à la fois le procédé de cryptographie $A$ et l'algorithme de génération du masque de travail puisse être considéré sûr à l'ordre d. Dans l'art antérieur, le problème est tout simplement ignoré en considérant que l'adversaire ne peut pas observer les variables intermédiaires apparaissant dans l'algorithme de génération du masque de travail.

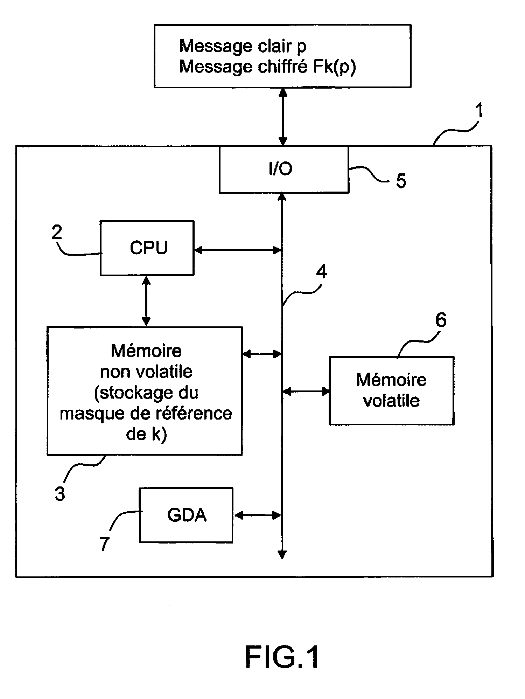

La figure 1 schématise un exemple d'architecture d'un circuit électronique 1 permettant la mise en oeuvre du procédé selon l'invention. Ce circuit comprend une unité centrale de traitement 2 (CPU) capable d'exécuter des programmes contenus dans une ou plusieurs mémoires. Dans cet exemple, le circuit 1 comporte une mémoire non volatile réinscriptible 3 dans laquelle va être stocké le masque de référence de la clé k. Un ou plusieurs bus de données 4, d'adresses et de commande servent de support de communication entre les différents constituants du circuit 1 avec une interface entrée/sortie, I/O, 5 pour la communication avec l'extérieur. Cette interface servira à l'introduction de la donnée d'entrée p et à la donnée de sortie $F_k(_P)$. Une autre mémoire 6 peut être utilisée pour stocker les valeurs intermédiaires des traitements effectués par le CPU 2, cette mémoire est optionnelle les étapes du procédé pouvant être mises en oeuvre en utilisant la mémoire non volatile réinscriptible 3.

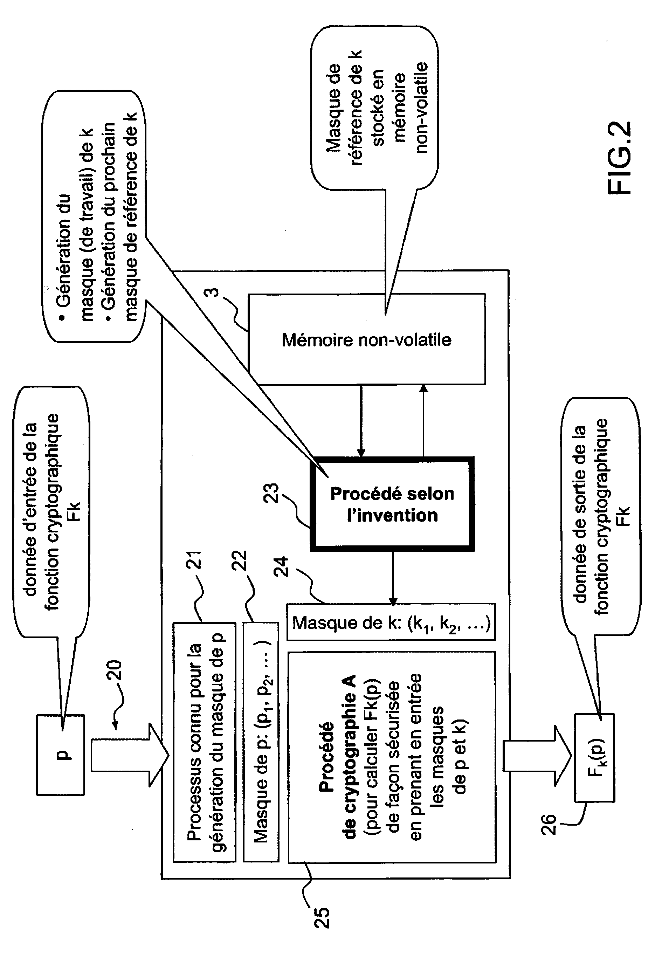

La figure 2 représente un schéma bloc des différentes étapes mises en oeuvre pour le calcul de $F_k(p)$.

L'entrée de la fonction cryptographique p est introduite 20 dans le dispositif de chiffrement 1 et stocké dans la mémoire de travail 6, par exemple, afin d'être traité de manière à générer 21 un masque de p en mettant en oeuvre un procédé connu de l'Homme du métier, la génération du masque pouvant s'exécuter dans la mémoire de travail 6. A l'issue de ce traitement, l'entrée p se présente sous la forme d'un d-uplet de composantes $p_i$ 22 appelé masque de p associé à la donnée d'entrée de l'algorithme cryptographique. Au lieu de la mémoire 6, il est possible d'utiliser la mémoire non volatile et réinscriptible.

Le masque de référence de la clé k se trouve dans la mémoire non volatile réinscriptible 3.

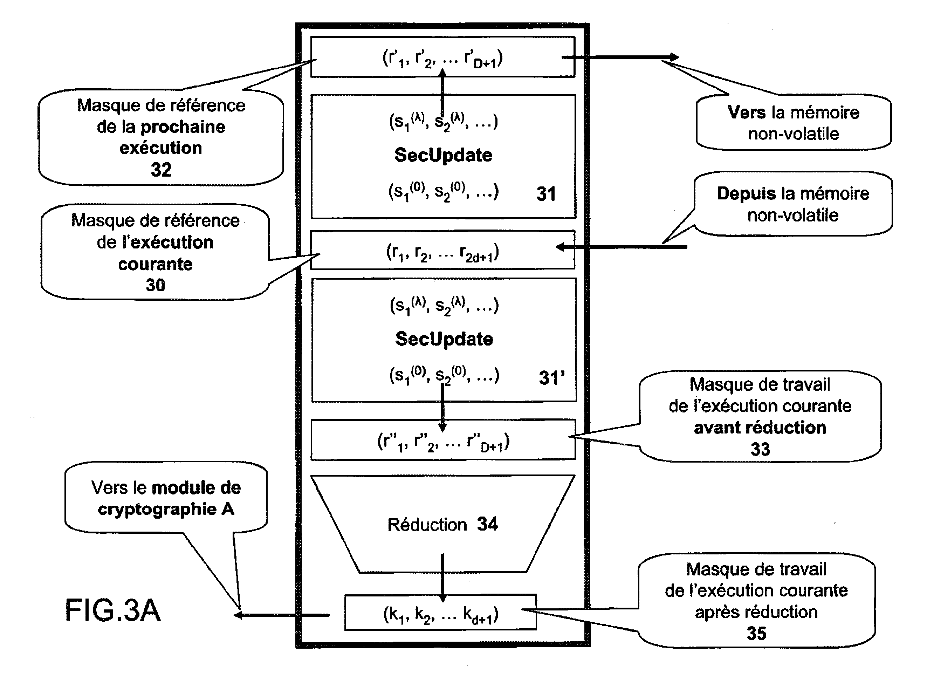

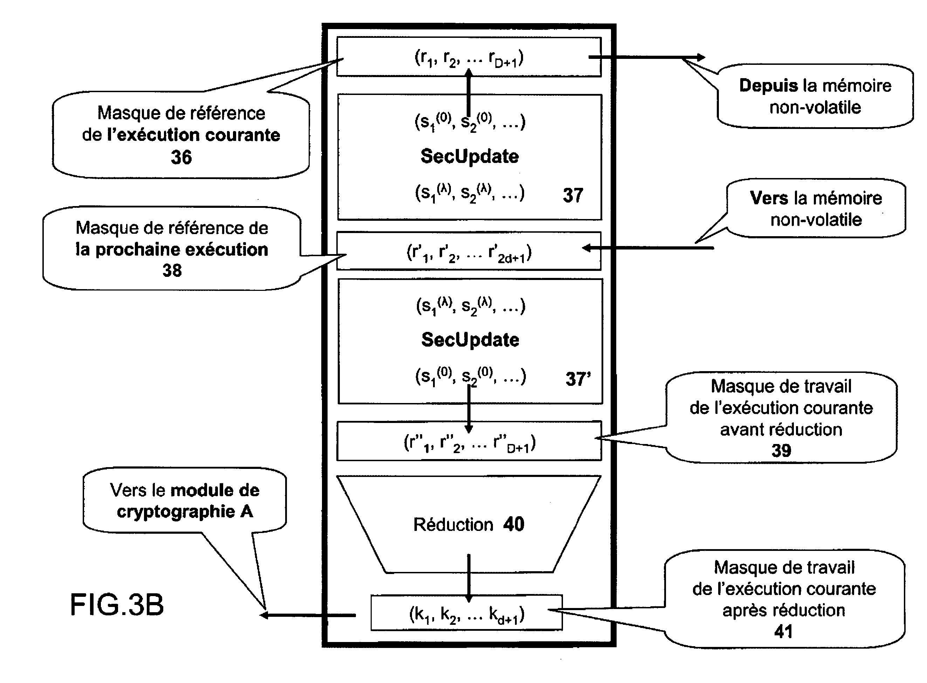

La production de masque est donnée en référence aux figures 2, 3A, 3B, l'unité centrale (2 figure 1) de traitement va exécuter un programme prenant en entrée le masque de référence courant de D+1 composantes $(r_1,...,r_{D+1})$ (23 figure 2, 30 figure 3A) de la clé k, masque Mr stocké en mémoire non-volatile afin de produire par application de l'algorithme SecUpdate, 31, d'une part le prochain masque de référence Mr' de D+1 composantes $(r'_1,..., r'_{D+1})$ 32 , d'autre part par l'étape 31' un masque Mr" de D+1 composantes $(r"_1, ..., r"_{D+1})$, 33, dont on dérive par réduction 34 comme explicité ci-après, un masque de travail Mt de d+1 composantes $(k_1, ..., k_{d+1})$ 35 pour l'exécution courante, avec D un paramètre de sécurité tel que D>=d. L'idée de la présente invention consiste notamment à utiliser un générateur de nombres aléatoires ou GDA pour générer des quantités aléatoires, à combiner les composantes constituant le masque de référence courant (masque donné en entrée) de la clé k avec les quantités aléatoires qui viennent d'être générées afin de produire de nouveaux masques de la même clé. L'un des masques de la clé généré par le procédé selon l'invention servira de prochain masque de référence, l'autre masque de la clé, 24 (figure 2), sera utilisé dans un module 25 (figure 2) mettant en oeuvre un procédé de cryptographie A pour calculer la sortie de la fonction cryptographique $F_k$ (p). Les valeurs des paramètres de sécurité D et $\lambda$ sont choisies, par exemple, librement par l'utilisateur du procédé en fonction croissante du degré de sécurité demandé par l'utilisateur.

Dans le cas d'un algorithme de chiffrement, l'entrée de la fonction cryptographique correspond à un message clair et la sortie de la fonction cryptographique à un message chiffré.

L'exemple qui suit va être donné pour illustrer le procédé dans le cas d'un groupe générique G dont la loi de composition interne est notéeO.

Le procédé selon l'invention consiste, notamment, à maintenir le secret k G en mémoire non-volatile réinscriptible sous la forme d'un masque Mr de D+1 composantes $(r_1, ..., r_{D+1}) \in G^{D+1}$ mis à jour à chaque nouvelle exécution de l'algorithme de cryptographie A sous la forme d'un nouveau masque de référence Mr' de D+1 composantes $(r'_1, ..., r'_{D+1})$, dont on extrait un masque Mr" de D+1 composantes $(r"_1, ..., r"_{D+1}) \in G^{D+1}$ avant réduction à un nombre de composantes d+1 sous la forme d'un masque de travail Mt de d+1 composantes $(k_i, ..., k_{d+1}) \in G^{d+1}$, en assurant que tout d-uplet de variables intermédiaires apparaissant lors de l'exécution du procédé n'apporte aucune information sur la clé secrète $k = r_1 \, O \cdots.. O \, r_{D+1} = r'_1 \, O \cdots. O \, r'_{D+1} = r"_1 \, O \cdots. O \, r"_{D+1} = k'_1 \, O \cdots O \, k'_{d+1}$.

Le procédé selon l'invention prend en entrée la séquence des composantes du masque de référence Mr $(r_1, ..., r_{D+1})$ de la clé secrète k et retourne la séquence Mr' $(r'_1, ..., r'_{D+1})$ du masque de référence mis à jour et la séquence $(k_1, ..., k_{d+1})$ du masque de travail Mt, les composantes des masques vérifiant la relation suivante :

$$r_1 \, O \, \dots \, O \, r_{D+1} = r'_1 \, O \, \dots \, O \, r'_{D+1} = k_1 \, O \, \dots \, O \, k_{d+1} = k.$$

Le procédé selon l'invention s'appuie notamment sur la mise en oeuvre d'un algorithme désigné SecUpdate.

Le procédé effectue au moins deux appels à l'algorithme SecUpdate pour obtenir :

- les composantes $r'_i$ lors de l'un des appels, et
- les composantes $k_i$ précitées lors d'un autre appel.

Pour cela, l'algorithme SecUpdate prend en entrée le paramètre de sécurité $\lambda \geq 1$ entier, une séquence $(s_1^{(0)}, ..., s_{D+1}^{(0)})$ correspond à un masque de référence du secret k, et calcule successivement les $\lambda$ séquences $(s_1^{(1)}, ..., s_{D+1}^{(1)}), ..., (s_1^{(\lambda)}, ..., s_{D+1}^{(\lambda)})$, toutes représentatives de la même valeur $k$, i.e. qui vérifient :

$$s_1^{(1)} \, O \, \dots \, O \, s_{D+1}^{(1)} = s_1^{(2)} \, O \, \dots \, O \, s_{D+1}^{(2)} = \dots = s_1^{(\lambda)} \, O \, \dots \, O \, s_{D+1}^{(\lambda)} = k.$$

Dans cet exemple les variables $(s_1^{(0)}, .... s_{D+1}^{(0)})$ prennent la valeur des composantes $(r_1, .... r_{D+1})$ du masque de référence initial de la clé secrète, les variables $(s_1^{(\lambda)}, ..., s_{D+1}^{(\lambda)})$ correspondent à la valeur des composantes $(r'_1, ..., r'_{D+1})$ lors d'un des appels à SecUpdate et à la valeur des composantes $(r"_1, ..., r"_{D+1})$ lors d'un autre appel à SecUpdate.

Sans sortir du cadre de l'invention, pour générer les composantes $(r"_1, ..., r"_{D+1})$ (33 figure 3A ou 39 figure 3B), on pourrait aussi prendre comme masque de référence les composantes $(r'_1, ..., r'_{D+1})$ (32 figure 3A ou 38 figure 3B) selon le mode de réalisation donné en figure 3B, où le masque de référence de l'exécution i-1 est toujours le masque $(r_1, ..., r_{D+1})$ (30 figure 3A ou 36 figure 3B), l'étape de randomisation 37 entrelacée produit un masque de référence de clé $(r'_1, ..., r'_{D+1})$ 38 stocké dans la mémoire volatile non réinscriptible, l'étape de randomisation 37' produit un masque 39 de travail de l'exécution courante avant réduction, l'étape de réduction 40 génère les composantes 41 du masque de travail utilisé par le module 25 (figure 2) pour l'exécution du procédé de cryptographie A .

L'algorithme SecUpdate ayant pour objectif d'obtenir les composantes du masque Mr' et Mr" de la clé secrète étant donné un masque Mr s'applique en considérant les paramètres de sécurité D et $\lambda$ souhaités, et les composantes du masque de référence la clé k :

- D : un paramètre de sécurité avec d $\leq$ D, D peut prendre la valeur 2d

- À : un paramètre $1 \leq \lambda$ , $\lambda$ peut prendre les valeurs d-1, d+1, ....

- $s_1^{(0)}, ..., s_{D+1}^{(0)} \in$ GF(2)$^m$ avec $k = s_1^{(0)} \, O \cdots.. O \, s_{D+1}^{(0)}$ un masque de référence du secret

- $s_1^{(\lambda)}, ..., s_{D+1}^{(\lambda)} \in$ GF(2)$^m$ avec $k = s_1^{(\lambda)} \, O \, ... \, O \, s_{D+1}^{(\lambda)}$ un nouveau un nouveau masque de référence Mr' ou Mr" du secret.

Le procédé va exécuter une boucle pour *i*=1 à λ le nombre d'itération souhaité qui consiste à générer les D premières composantes du masque de la clé secrète ($s_1^{(i)},...,s_D^{(i)}$) en utilisant un générateur d'aléa puis, à déterminer la valeur de la D+1 ième composante du masque de la clé secrète en combinant les composantes ($s_1^{(i+1)},...,s_D^{(i+1)}$) du masque de clé de l'itération i-1 avec les composantes ($s_1^{(i)},...,s_D^{(i)}$) du masque de clé de la clé secrète de l'itération i générées par application du générateur d'aléa GDA, tout en respectant un ordre où l'on intercale une composante du masque Mr de l'itération i, une composante du masque de l'itération i-1, une composante du masque de l'itération i, une composante du masque de l'itération i-1, etc. Cette boucle va être effectuée au moins deux fois pour produire comme indiqué précédemment les composantes du masque de référence mis à jour Mr', ainsi que les composantes du masque Mr" qui devient après réduction le masque Mt à utiliser dans un processus cryptographique.

Par exemple, pour déterminer la valeur de la D+1 ième composante du masque de la clé secrète, le procédé prend en compte chacune des composantes du masque de la clé de l'itération i-1 et des composantes du masque de la clé de l'itération i générées par la fonction aléatoire, de la manière suivante :

$$s_{D+1}^{(i)} \leftarrow s_1^{(i-1)} \bigcirc s_1^{(i)} \bigcirc s_2^{(i-1)} \bigcirc s_2^{(i)} \bigcirc ..\cdots. \bigcirc s_D^{(i-1)} \bigcirc s_D^{(i)} \bigcirc s_{D+1}^{(i-1)}$$

on obtient de cette façon toutes les composantes du masque de la clé.

La dernière composante $s_{D+1}^{(i+1)}$ du masque de travail ou de référence de l'itération i+1 est obtenue en alternant une composante $s_1^{(i)},...,s_{D+1}^{(i)}$ du masque de l'itération i avec une composante $s_1^{(i+1)},...,s_D^{(i+1)}$ du masque de l'itération i+1 générés à l'étape de génération d'un nouveau masque de travail ou de travail, en respectant l'ordre des composantes.

Dans une variante de réalisation on peut commencer par une composante de l'itération i, suivie d'une composante de l'itération i-1, suivie d'une composante de l'itération i, ... etc.

La combinaison des parties de clé d'indice i ou i-1 peut se faire de différentes façons.

Dans l'exemple donné ci-dessus, la combinaison consiste à considérer dans l'ordre de rang les composantes, ainsi la dernière composante du masque de clé de l'itération i est calculée en combinant la composante 1 du masque de l'itération i avec la composante 1 du masque de l'itération i-1, le résultat étant combiné ensuite avec les deuxièmes composantes et ainsi de suite jusqu'à la composante D+1 du masque de l'itération i-1 qui ne sera pas combinée avec la composante D+1 d'itération i, car c'est cette valeur qui va être déterminée.

Sans sortir du cadre de l'invention il est possible de combiner de manière aléatoire les composantes ou éléments constituant les clés, l'important étant de considérer toutes les composantes du masque de clé de l'itération i-1 et toutes les composantes du masque de clé de l'itération i sauf une pour déterminer la dernière composante du masque de clé de l'itération i.

En sortie on obtient un masque de la clé avec D+1 composantes. Une exécution de SecUpdate fournit directement le prochain masque de référence de la clé qui va être mémorisé dans la mémoire non volatile et réinscriptible et qui va être utilisée comme prochain masque de référence.

Par exemple, étant donné un masque de référence initial Mr = ($r_1$, ..., $r_{D+1}$) de la clé pour entrée ($s_1^{(0)},...,s_{D+1}^{(0)}$) de l'algorithme SecUpdate, le masque de référence devient simplement Mr' = ($r'_1$, ..., $r'_{D+1}$) correspondant à la sortie ($s_1^{(\lambda)},....,s_{D+1}^{(\lambda)}$) de l'algorithme SecUpdat, Une autre exécution de l'algorithme SecUpdate (avec d'autres quantités aléatoires) fournit un autre masque de D+1 composantes Mr" = ($r"_1$, ..., $r"_{D+1}$) qui va être utilisé après réduction comme masque de travail. Avant de pouvoir être utilisé comme masque de travail, ce masque Mr" doit être réduit de D+1 composantes à d+1 composantes noté Mt de la façon suivante. Chacune des composantes de Mt sont obtenues, par exemple, en combinant une ou plusieurs composantes du masque Mr". Par exemple, étant donné un masque de la clé Mr" = ($r"_1$, ..., $r"_{D+1}$) = ($s_1^{(\lambda)},...,s_{D+1}^{(\lambda)}$), le masque de travail Mt devient $k_1$, ..., $k_d$ avec :

$$k_1 \leftarrow s_1^{(\lambda)},$$
$$k_2 \leftarrow s_2^{(\lambda)} \bigcirc s_3^{(\lambda)},$$
$$k_3 \leftarrow s_4^{(\lambda)} \bigcirc s_5^{(\lambda)},$$
$$...$$
$$k_d \leftarrow s_{2d-2}^{(\lambda)} \bigcirc s_{2d-1}^{(\lambda)},$$
$$k_{d+1} \leftarrow s_{2d}^{(\lambda)} \bigcirc ... \bigcirc s_{D+1}^{(\lambda)}$$

ou de manière plus générale ;

l'étape de réduction des composantes d'un masque est exécutée, par exemple, de la manière suivante : soit un masque $s_1^{(\lambda)},...,s_{D+1}^{(\lambda)}$, de la clé k, le masque de travail devient $k_1, ..., k_d$ avec :

$$k_{\pi(1)} \leftarrow s_{\pi'(1)}^{(\lambda)} ,$$

$$k_{\pi(2)} \leftarrow s_{\pi'(2)}^{(\lambda)} \bigcirc s_{\pi'(3)}^{(\lambda)},$$

$$k_{\pi(3)} \leftarrow s_{\pi'(4)}^{(\lambda)} \bigcirc s_{\pi'(5)}^{(\lambda)},$$

$$...$$

$$k_{\pi(d)} \leftarrow s_{\pi'(2d-2)}^{(\lambda)} \bigcirc s_{\pi'(2d-1)}^{(\lambda)},$$

$$k_{\pi(d+1)} \leftarrow s_{\pi'(2d)}^{(\lambda)} \bigcirc ... \bigcirc s_{\pi'(D+1)}^{(\lambda)}$$

avec :

$\pi$ une permutation quelconque de l'ensemble {1, 2, ..., d+1}, par exemple $\pi$ est l'identité avec $\pi(1)=1$, $\pi(2)=2$, ..., $\pi(d+1)=d+1$

$\pi'$ une permutation quelconque de l'ensemble {1, 2, ..., D+1}, par exemple $\pi'$ est l'identité avec $\pi'(1)=1$, $\pi'(2)=2$, ..., $\pi'(D+1)=D+1$.

Ces exemples de combinaison ne sont donnés qu'à titre illustratif et nullement limitatif, le nombre de composantes combinées pouvant ne pas être limitées à 2.

Ainsi, avec le procédé selon l'invention, à chaque nouvelle exécution, c'est-à-dire à chaque fois que l'on souhaite obtenir une clé secrète, on extrait deux masques, le prochain masque de référence, et le masque de travail pour l'exécution courante en assurant que tout d-uplet de variables intermédiaires apparaissant lors de l'exécution du procédé n'apporte aucune information sur le secret.

L'étape suivante 25 (figure 2) va consister dans un procédé de cryptographie connu de l'Homme du métier pour calculer la sortie Fk(p) avec le masque de la clé secrète.

Le procédé selon l'invention offre notamment un niveau de sécurité prouvable .

## Proposition 1

Soit d, D, $\lambda$ des entiers tels que $D \geq 2d$ et $\lambda \geq d+1$. Soit $\Omega^0 = \{s_1^{(0)},...,s_{D+1}^{(0)}\}$ et $\Omega^1 = \{s_1^{(\lambda)},...,s_{D+1}^{(\lambda)}\}$. Soit $\Omega_{SecUpdate}$ l'ensemble des éléments apparaissant lors des calculs effectués dans l'algorithme SecUpdate. Soit un attaquant disposant de au plus D-d éléments de $\Omega^0$ et effectuant au plus d observations dans $\Omega_{SecUpdate}$.

Alors:

1. L'attaquant n'obtient aucune information sur k.
2. L'attaquant obtient de l'information sur au plus d éléments dans l'ensemble $\Omega^1$.

## Proposition 2

Soit d, D, $\lambda$ des entiers tels que $D = 2d$ et $\lambda = d-1$. Soit $\Omega^0 = \{r_1,...,r_{D+1}\}$ et $0\Omega^+ = \{s_2^{(\lambda)} \bigcirc s_3^{(\lambda)} ..., s_D^{(\lambda)} \bigcirc s_{D+1}^{(\lambda)}\}$ Soit $\Omega_{SecUpdate}$ l'ensemble des éléments apparaissant lors des calculs effectués dans l'algorithme SecUpdate. Soit un attaquant disposant de d éléments $\Omega^0$ et effectuant au plus d observations dans $\Omega_{SecUpdate} \cup \Omega^+$.

Alors l'attaquant n'obtient aucune information sur k.

## Applications possibles

Le procédé et le dispositif selon l'invention s'appliquent notamment dans une carte à puce constituée d'un support plastique dans ou sur lequel est rapportée une puce de circuit électronique susceptible de communiquer avec l'extérieur au moyen de contacts ou au moyen d'éléments d'émission-réception sans contact. Dans cet exemple de mise en oeuvre le circuit contient une unité de traitement dont au moins une fonction effectue des calculs sur une donnée

Par accès contrôlé, on entend une quantité numérique que l'on souhaite protéger contre des tentatives de piratage en particulier de type par analyse des canaux auxiliaires comme il a été mentionné précédemment.

**EP 2 599 256 B1**

L'invention peut aussi s'appliquer à des systèmes de télédiffusion à accès contrôlé. Dans ce cas une antenne reçoit des signaux provenant d'un satellite qu'elle transmet à un décodeur pour afficher sur un écran de téléviseur. Le décodeur comporte une ou plusieurs cartes électroniques pourvues d'un ou de plusieurs circuits de traitement de données numériques reçues. Ce traitement consiste en un décodage, déchiffrement au moyen d'une ou plusieurs clés que possède le décodeur. Ces clés sont contenues dans des mémoires associées au circuit électronique ou sur un élément externe, par exemple une puce introduite dans le décodeur.

Le procédé et son dispositif de mise en oeuvre associé présentent notamment les avantages suivants: une solution prouvée sûre à tout ordre d au problème de la génération du masque de travail des éléments du secret. L'attaquent n'obtient aucune information sur le secret. L'attaquant obtient au plus un d composantes du masque de clé qui ne lui permettent pas de retrouver la clé.

**Revendications**

1.    Procédé de randomisation des composantes $s_1^{(0)}$, ..., $s_{D+1}^{(0)}$ appartenant à un groupe G d'un masque de référence d'une clé k destinée à des traitements cryptographiques au sein d'un module de cryptographie, où D et λ sont des paramètres de sécurité dont les valeurs sont choisies en fonction croissante du degré de sécurité demandé par l'utilisateur, avec D le nombre de composantes du masque de référence et λ un nombre d'itérations, **caractérisé en ce qu'**il comporte au moins l'utilisation d'un générateur d'aléa (7) pour générer à chaque nouvelle mise en oeuvre du procédé les composantes du masque de référence de ladite clé appartenant à $G^{D+1}$, ledit masque étant mis à jour à chaque nouvelle exécution de l'algorithme de cryptographie, et les composantes d'un masque dit de travail de ladite clé appartenant à $G^{D+1}$, ledit procédé comprenant au moins les étapes suivantes:

     1 - à partir des composantes d'un masque de référence de la clé k donné, $s_1^{(0)}$, ..., $s_{D+1}^{(0)}$ G un groupe muni d'une opération interne O avec $k = s_1^{(0)}$ O ... O $s_{D+1}^{(0)}$, (30, 36)
     Exécuter une boucle sur i=0 à λ-1 comprenant les étapes 2 et 3 suivantes :
     2 - générer un nouveau masque de référence (32, 38) ou de travail (33, 39) de ladite clé k en utilisant ledit générateur d'aléa (7) produisant les D premières composantes du masque de l'itération i+1

$$(s_1^{(i+1)},...,s_D^{(i+1)}) \leftarrow \text{rand}(G^D)$$

     3- puis déterminer la dernière composante $s_{D+1}^{(i+1)}$ du masque de travail ou de référence de l'itération i+1 en alternant une composante $s_1^{(i)},...,s_{D+1}^{(i)}$ du masque de l'itération i avec une composante $s_1^{(i+1)},...,s_D^{(i+1)}$ du masque de l'itération i+1 générés à l'étape 2, en respectant l'ordre des composantes,
     4 - effectuer λ itérations des étapes 2 et 3 afin d'obtenir un masque de composantes ($s_1^{(λ)},...,s_{D+1}^{(λ)}$), utiliser ledit masque soit pour mettre à jour le masque de référence, soit pour exécuter un procédé cryptographique.

2.    Procédé selon la revendication 1 **caractérisé en ce qu'**il comporte une étape de réduction du nombre d'éléments obtenus à l'étape 4 pour réduire le masque ($s_1^{(λ)},...,s_{D+1}^{(λ)}$) en question de D+1 composantes à d+1 composantes ($k_1$, ..., $k_{d+1}$) (35, 41) où chacune des composantes $k_i$ est obtenue par combinaison d'une ou plusieurs des composantes $s_i^{(λ)}$.

3.    Procédé selon la revendication 2 **caractérisé en ce que** la combinaison d'une ou de plusieurs des composantes $s_i^{(λ)}$ est exécutée en mettant en oeuvre l'opération O associée au groupe G.

4.    Procédé selon la revendication 1 ou 2 **caractérisé en ce que** le paramètre D est fixé à D=2d, le paramètre λ est fixé λ=d+1 pour obtenir un masque de référence mis à jour, et λ = d-1 pour obtenir un masque de travail avant réduction pour application d'un processus cryptographique.

5.    Procédé selon la revendication 2 **caractérisé en ce que** l'étape de réduction des composantes d'un masque est exécutée de la manière suivante : soit un masque $s_1^{(λ)},...,s_{D+1}^{(λ)}$, de la clé k, le masque de travail devient $k_1$, ..., $k_d$ avec :

$$k_{\pi(1)} <- s_{\pi'(1)}^{(\lambda)},$$

$$k_{\pi(2)} <- s_{\pi'(2)}^{(\lambda)} \bigcirc s_{\pi'(3)}^{(\lambda)},$$

$$k_{\pi(3)} <- s_{\pi'(4)}^{(\lambda)} \bigcirc s_{\pi'(5)}^{(\lambda)},$$

$$...$$

$$k_{\pi(d)} <- s_{\pi'(2d-2)}^{(\lambda)} \bigcirc s_{\pi'(2d-1)}^{(\lambda)},$$

$$k_{\pi(d+1)} <- s_{\pi'(2d)}^{(\lambda)} \bigcirc ... \bigcirc s_{\pi'(D+1)}^{(\lambda)}$$

avec :

$\pi$ une permutation quelconque de l'ensemble {1, 2, ..., d+1}, par exemple $\pi$ est l'identité avec $\pi(1)=1$, $\pi(2)=2$, ..., $\pi(d+1)=d+1$

$\pi'$ une permutation quelconque de l'ensemble {1,2, ..., D+1}, par exemple $\pi'$ est l'identité avec $\pi'(1)=1$, $\pi'(2)=2$, ..., $\pi'(D+1)=D+1$

6. Dispositif pour générer un masque de travail d'une clé secrète **caractérisé en ce qu'**il comporte au moins les éléments suivants : une unité de traitement (2) adaptée à exécuter les étapes du procédé selon l'une des revendications 1 à 5, une mémoire non volatile et réinscriptible destinée à mémoriser le masque de référence de la clé, des entrées/sorties pour le passage des données d'entrée et de sortie d'un procédé cryptographique, un bus de communication (4), un générateur d'aléa (7).

7. Dispositif selon la revendication 6 **caractérisé en ce qu'**il comporte une mémoire volatile (6) permettant de stocker les composantes d'un masque lors de la mise en oeuvre du procédé.

## Patentansprüche

1. Verfahren zum Randomisieren von Komponenten $s_1^{(0)},...,s_{D+1}^{(0)}$, die zu einer Gruppe G aus einer Referenzmaske eines Schlüssels k zur kryptografischen Verarbeitung in einem Kryptografiemodul gehören, wobei D und $\lambda$ Sicherheitsparameter sind, deren Werte als zunehmende Funktion der vom Benutzer angeforderten Sicherheitsstufe ausgewählt werden, wobei D die Anzahl der Komponenten der Referenzmaske und $\lambda$ die Anzahl von Iterationen ist, **dadurch gekennzeichnet, dass** es wenigstens die Verwendung eines Zufallsgenerators (7) beinhaltet, um bei jeder neuen Implementation des Verfahrens die Komponenten der Referenzmaske des zu $G^{D+1}$ gehörenden Schlüssels, wobei die Maske bei jeder neuen Ausführung des Kryptografiealgorithmus aktualisiert wird, und die Komponenten einer Maske, Arbeitsmaske genannt, des zu $G^{D+1}$ gehörenden Schlüssels zu erzeugen, wobei das Verfahren wenigstens die folgenden Schritte beinhaltet:

1 ausgehend von den Komponenten einer gegebenen Referenzmaske des Schlüssels k, $s_1^{(0)},...,s_{D+1}^{(0)}$ G, eine Gruppe, versehen mit einem internen Vorgang $\bigcirc$, mit k = $s_1^{(0)} \bigcirc... \bigcirc s_{D+1}^{(0)}$ (30, 36), ausführen einer Schleife auf i=0 bis $\lambda$-1, umfassend die folgenden Schritte 2 und 3:

2 Erzeugen einer neuen Referenzmaske (32, 38) oder Arbeitsmaske (33, 39) des Schlüssels k unter Verwendung des Zufallsgenerators (7) zum Erzeugen der D ersten Komponenten der Maske der Iteration i+1 ($s_1^{(i+1)},...,s_D^{(i+1)}$) $\leftarrow$ rand ($G^D$);

3 dann Ermitteln der letzten Komponente $s_{D+1}^{(i+1)}$ der Arbeits- oder Referenzmaske der Iteration i+1 durch Abwechseln einer Komponente $s_1^{(i)},...,s_{D+1}^{(i)}$ der Maske der Iteration i mit einer Komponente $s_1^{(i+1)},..., s_D^{(i+1)}$ der Maske der Iteration i+1, erzeugt in Schritt 2, unter Einhaltung der Reihenfolge der Komponenten;

4 Durchführen von $\lambda$ Iterationen der Schritte 2 und 3, um eine Maske von Komponenten ($s_1^{(\lambda)},...,s_{D+1}^{(\lambda)}$) zu erhalten, wobei diese Maske entweder zum Aktualisieren der Referenzmaske oder zum Ausführen eines kryptografischen Verfahrens dient.

2. Verfahren nach Anspruch 1, **dadurch gekennzeichnet, dass** es einen Schritt des Reduzierens der Zahl der in Schritt 4 erhaltenen Elemente beinhaltet, um die fragliche Maske ($s_1^{(\lambda)},...,s_{D+1}^{(\lambda)}$) von D+1 Komponenten auf d+1 Komponenten ($k_1,...,k_{d+1}$) (35, 41) zu reduzieren, wobei jede der Komponenten $k_i$ durch Kombinieren von einer oder mehreren der Komponenten $s_i^{(\lambda)}$ erhalten wird.

3. Verfahren nach Anspruch 2, **dadurch gekennzeichnet, dass** die Kombination von einer oder mehreren der Komponenten $s_i^{(\lambda)}$ durch Implementieren der mit der Gruppe G assoziierten Operation $\circ$ ausgeführt wird .

4. Verfahren nach Anspruch 1 oder 2, **dadurch gekennzeichnet, dass** der Parameter D auf D=2d gesetzt wird, der Parameter $\lambda$ auf $\lambda$= d+1 gesetzt wird, um eine aktualisierte Referenzmaske zu erhalten, und $\lambda$ = d-1 gesetzt wird, um eine Arbeitsmaske zu erhalten, vor dem Reduzieren für die Anwendung eines kryptografischen Prozesses.

5. Verfahren nach Anspruch 2, **dadurch gekennzeichnet, dass** der Schritt des Reduzierens von Komponenten einer Maske wie folgt ausgeführt wird: mit einer Maske $s_1^{(\lambda)},...,s_{D+1}^{(\lambda)}$ des Schlüssels k, wobei die Arbeitsmaske $k_1,...,k_d$ wird, mit:

$$k_{\pi(1)} <- s_{\pi'(1)}^{(\lambda)},$$
$$k_{\pi(2)} <- s_{\pi'(2)}^{(\lambda)} \circ s_{\pi'(3)}^{(\lambda)},$$
$$k_{\pi(3)} <- s_{\pi'(4)}^{(\lambda)} \circ s_{\pi'(5)}^{(\lambda)},$$
$$\ldots$$
$$k_{\pi(d)} <- s_{\pi'(2d-2)}^{(\lambda)} \circ s_{\pi'(2d-1)}^{(\lambda)},$$
$$k_{\pi(d+1)} <- s_{\pi'(2d)}^{(\lambda)} \circ \ldots \circ s_{\pi'(D+1)}^{(\lambda)}$$

wobei:

$\pi$ eine beliebige Permutation des Satzes {1, 2, ..., d+1} ist, z.B. ist $\pi$ die Identität mit $\pi(1)=1$, $\pi(2)=2$,..., $\pi(d+1)=d+1$; $\pi'$ eine beliebige Permutation des Satzes {1, 2, ..., D+1} ist, z.B. ist $\pi'$ die Identität mit $\pi'(1)=1$, $\pi'(2)=2$, ..., $\pi'(D+1)=D+1$.

6. Vorrichtung zum Erzeugen einer Arbeitsmaske eines geheimen Schlüssels, **dadurch gekennzeichnet, dass** sie wenigstens die folgenden Elemente umfasst: eine Verarbeitungseinheit (2) zum Ausführen der Schritte des Verfahrens nach einem der Ansprüche 1 bis 5, einen nichtflüchtigen und wiederbeschreibbaren Speicher zum Speichern der Referenzmaske des Schlüssels, Eingänge/Ausgänge zum Übertragen der Ein- und Ausgangsdaten eines kryptografischen Verfahrens, einen Kommunikationsbus (4) und einen Zufallsgenerator (7).

7. Vorrichtung nach Anspruch 6, **dadurch gekennzeichnet, dass** sie einen flüchtigen Speicher (6) zum Speichern der Komponenten einer Maske beim Ausführen des Verfahrens umfasst.

**Claims**

1. A method for randomising components $s_1^{(0)},...,s_{D+1}^{(0)}$ belonging to a group G of a reference mask of a key k designed for cryptographic processing within a cryptography module, where D and $\lambda$ are security parameters, the values of which are selected as an increasing function of the security rating requested by the user, with D being the number of components of the reference mask and $\lambda$ being a number of iterations, **characterised in that** it comprises at least the use of a random generator (7) for generating, upon each new implementation of the method, the components of the reference mask of said key belonging to $G^{D+1}$, said mask being updated upon each new execution of the cryptography algorithm, and the components of a mask, referred to as working mask, of said key belonging to $G^{D+1}$, said method comprising at least the following steps:

1 executing, on the basis of the components of a given reference mask of the key k, $s_1^{(0)},...,s_{D+1}^{(0)}$ G a group provided with an internal operation $\circ$ with k = $s_1^{(0)} \circ ... \circ s_{D+1}^{(0)}$, (30, 36), a loop on i=0 to $\lambda$-1 comprising the following steps 2 and 3:
2 generating a new reference (32, 38) or working (33, 39) mask of said key k using said random generator (7) producing the D first components of the mask of the iteration i+1 ($s_1^{(i+1)},...,s_D^{(i+1)} \leftarrow$ rand ($G^D$);
3 then determining the last component $s_{D+1}^{(i+1)}$ of the working or reference mask of the iteration i+1 by alternating a component $s_1^{(i)},...,s_{D+1}^{(i)}$ of the mask of the iteration i with a component $s_1^{(i+1)},...,s_D^{(i+1)}$ of the mask of the iteration i+1 generated during step 2, whilst complying with the sequence of the components;
4 carrying out $\lambda$ iterations of steps 2 and 3 so as to obtain a mask of components ($s_1^{(\lambda)},...,s_{D+1}^{(\lambda)}$, using said

mask either for updating the reference mask or for executing a cryptographic method.

2. The method according to claim 1, **characterised in that** it comprises a step of reducing the number of elements obtained during step 4 so as to reduce the mask $(s_1^{(\lambda)},...,s_{D+1}^{(\lambda)})$ in question from D+1 components to d+1 components $(k_1,...,k_{d+1})$ (35, 41), where each of the components $k_i$ is obtained by combining one or more of the components $si^{(\lambda)}$.

3. The method according to claim 2, **characterised in that** the combination of one or more of the components $s_i^{(\lambda)}$ is executed by implementing the operation $\bigcirc$ associated with the group G.

4. The method according to claim 1 or 2, **characterised in that** the parameter D is set to D=2d, the parameter $\lambda$ is set to $\lambda$=d+1 so as to obtain an updated reference mask and $\lambda$ = d-1 so as to obtain a working mask before reduction for the application of a cryptographic process.

5. The method according to claim 2, **characterised in that** the step of reducing the components of a mask is executed as follows: with a mask $s_1^{(\lambda)},...,s_{D+1}^{(\lambda)}$ of the key k, the working mask becomes $k_1,...,k_d$ with:

$$k_{\pi(1)} \leftarrow s_{\pi'(1)}^{(\lambda)},$$
$$k_{\pi(2)} \leftarrow s_{\pi'(2)}^{(\lambda)} \bigcirc s_{\pi'(3)}^{(\lambda)},$$
$$k_{\pi(3)} \leftarrow s_{\pi'(4)}^{(\lambda)} \bigcirc s_{\pi'(5)}^{(\lambda)},$$
$$...$$
$$k_{\pi(d)} \leftarrow s_{\pi'(2d-2)}^{(\lambda)} \bigcirc s_{\pi'(2d-1)}^{(\lambda)},$$
$$k_{\pi(d+1)} \leftarrow s_{\pi'(2d)}^{(\lambda)} \bigcirc ... \bigcirc s_{\pi'(D+1)}^{(\lambda)},$$

with:

$\pi$ being any permutation of the set {1, 2, ..., d+1}, for example $\pi$ is the identity with $\pi$(1)=1, $\pi$(2)=2,..., $\pi$(d+1)=d+1; $\pi$' being any permutation of the set {1,2, ..., D+1}, for example $\pi$' is the identity with $\pi$'(1)=1, $\pi$'(2)=2,..., $\pi$'(D+1) =D+1.

6. A device for generating a working mask of a secret key, **characterised in that** it comprises at least the following elements: a processing unit (2) designed to execute the steps of the method according to any one of claims 1 to 5, a non-volatile and rewritable memory designed to store the reference mask of the key, inputs/outputs for transferring the input and output data of a cryptographic method, a communication bus (4), a random generator (7).

7. The device according to claim 6, **characterised in that** it comprises a volatile memory (6) for storing the components of a mask when implementing the method.

Message clair p
Message chiffré Fk(p)

I/O — 5

1

2 — CPU

4

6

Mémoire
non volatile
(stockage du
masque de référence
de k)

Mémoire
volatile

3

GDA

7

FIG.1

**donnée d'entrée de la fonction cryptographique Fk**

p

20

- Génération du masque (de travail) de k
- Génération du prochain masque de référence de k

**Processus connu pour la génération du masque de p** — 21

**Masque de p: (p₁, p₂, ... )** — 22

25

**Procédé de cryptographie A** (pour calculer Fk(p) de façon sécurisée en prenant en entrée les masques de p et k)

Masque de k: (k₁, k₂, ...) — 24

23 **Procédé selon l'invention**

3 Mémoire non-volatile

**Masque de référence de k stocké en mémoire non-volatile**

26

Fₖ(p)

**donnée de sortie de la fonction cryptographique Fk**

FIG.2

$(r'_1, r'_2, \ldots r'_{D+1})$

$(s_1^{(\Lambda)}, s_2^{(\Lambda)}, \ldots)$

**SecUpdate**

$(s_1^{(0)}, s_2^{(0)}, \ldots)$    **31**

$(r_1, r_2, \ldots r_{2d+1})$

$(s_1^{(\Lambda)}, s_2^{(\Lambda)}, \ldots)$

**SecUpdate**

$(s_1^{(0)}, s_2^{(0)}, \ldots)$    **31'**

$(r''_1, r''_2, \ldots r''_{D+1})$

Réduction **34**

$(k_1, k_2, \ldots k_{d+1})$

Masque de référence
de la **prochaine**
**exécution**
**32**

Masque de référence
de **l'exécution**
**courante**
**30**

**Vers** la mémoire
non-volatile

**Depuis** la mémoire
non-volatile

Masque de travail
de l'exécution courante
**avant réduction**
**33**

Vers le **module de**
**cryptographie A**

Masque de travail
de l'exécution courante
**après réduction**
**35**

FIG.3A

$$(r_1, r_2, \ldots r_{D+1})$$

Masque de référence de l'exécution courante **36**

Depuis la mémoire non-volatile

$$(s_1^{(0)}, s_2^{(0)}, \ldots)$$

**SecUpdate**

$$(s_1^{(\lambda)}, s_2^{(\lambda)}, \ldots) \quad 37$$

Vers la mémoire non-volatile

Masque de référence de **la prochaine exécution** **38**

$$(r'_1, r'_2, \ldots r'_{2d+1})$$

$$(s_1^{(\lambda)}, s_2^{(\lambda)}, \ldots)$$

**SecUpdate**

$$(s_1^{(0)}, s_2^{(0)}, \ldots) \quad 37'$$

Masque de travail de l'exécution courante avant réduction **39**

$$(r''_1, r''_2, \ldots r''_{D+1})$$

Réduction **40**

Vers le **module de cryptographie A**

$$(k_1, k_2, \ldots k_{d+1})$$

Masque de travail de l'exécution courante après réduction **41**

**FIG.3B**

**EP 2 599 256 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2020773 A